Europäisches Patentamt

European Patent Office

Office européen des brevets

(11) Publication number: **0 369 828**
**A2**

## EUROPEAN PATENT APPLICATION

(21) Application number: 89311972.7

(22) Date of filing: 20.11.89

(51) Int. Cl.5: **G02F 1/1343, G02F 1/136**

(30) Priority: 18.11.88 JP 291608/88

(43) Date of publication of application:
**23.05.90 Bulletin 90/21**

(84) Designated Contracting States:
**DE FR GB**

(71) Applicant: **NEC CORPORATION**
**33-1, Shiba 5-chome**
**Minato-ku Tokyo(JP)**

(72) Inventor: **Sukegawa, Osamu c/o NEC**
**Corporation**
**33-1, Chisba 5-chome**
**Minato-ku Tokyo(JP)**

(74) Representative: **Abnett, Richard Charles et al**
**REDDIE & GROSE 16 Theobalds Road**
**London WC1X 8PL(GB)**

(54) **Active matrix liquid crystal display panel with an electrostatic protection circuit.**

(57) An active-matrix liquid crystal display panel in-
cludes a matrix of pixel electrodes (5), data lines (1)
connected to the pixel electrodes by respective first
MIM diodes (6), address lines (7), a liquid crystal
layer (15) inserted between the pixel electrodes and
the address lines, wiring (2) on a peripheral portion
of the display, and second protective MIM diodes (3)
connected between the wiring and the data lines.
The second diodes provide protection for the data
lines from dielectric breakdown caused by electro-
static charges during manufacture.

Fig. 1

# ACTIVE MATRIX LIQUID CRYSTAL DISPLAY PANEL WITH AN ELECTROSTATIC PROTECTION CIRCUIT

## BACKGROUND OF THE INVENTION

### Field of the Invention

The present invention relates to an active matrix liquid crystal display panel and particularly, to an MIM (Metal-Insulator-Metal) diode-type active matrix liquid crystal display panel having an electrostatic protection circuit.

### Description of the Related Art

Conventionally, in the active matrix display panel, pixel electrodes are electrically connected by diode elements to data lines which are vertically wired, and there exists a space between the data lines to ensure electrical insulation as shown in "A New Active Diode Matrix LCD Using Off-Stoichiometric SiNx Layer", JAPAN DISPLAY '86-(1986), pp. 72-74 and "AN LC TV DISPLAY CONTROLLED BY a-Si DIODE RINGS", Proceedings of the SID, Vol. 26/1, 1985, pp. 9-15.

The conventional diode-type active matrix display panel as mentioned above has its data lines electrically insulated from each other. Therefore, a high voltage is electrostatically applied between adjacent data lines in the processes such as cutting process during panel formation and a connection process of driving IC circuits after the panel formation, causing a dielectric breakdown or destruction of diode elements and the like.

## SUMMARY OF THE INVENTION

Therefore, an object of the present invention is to provide an active matrix liquid crystal display panel having a circuit which protects the data lines from a dielectric breakdown caused by electrostatic charges.

The diode active matrix display panel of the present invention includes a diode element which is connected between a data line and a wiring and is located outside the display area.

According to the present invention, a diode is provided in a location outside the display area of a diode-type active matrix display panel and data lines are connected to each other through diodes so that a charge up of data lines can be restricted. As a result, an effect of preventing the destruction of an element by electrostatic charges can be attained.

## BRIEF DESCRIPTION OF THE DRAWINGS

The above and further objects, features and advantages of the present invention will become more apparent from the following detailed description taken in conjunction with the accompanying drawings, wherein:

Fig. 1 is a plan view for explaining a first embodiment of the present invention;

Fig. 2 is a sectional view taken along the line A-A′ in Fig. 1;

Fig. 3 is a plan view for explaining the portion 50 in Fig. 1;

Fig. 4 is a sectional view taken along the line B-B′ in Fig. 3;

Figs. 5(a) to 5(d) are plan view for explaining a manufacturing method of the liquid crystal display panel shown in Fig. 1; and

Fig. 6 is a plan view for explaining a second embodiment of the present invention.

## DESCRIPTION OF THE PREFERRED EMBODIMENTS

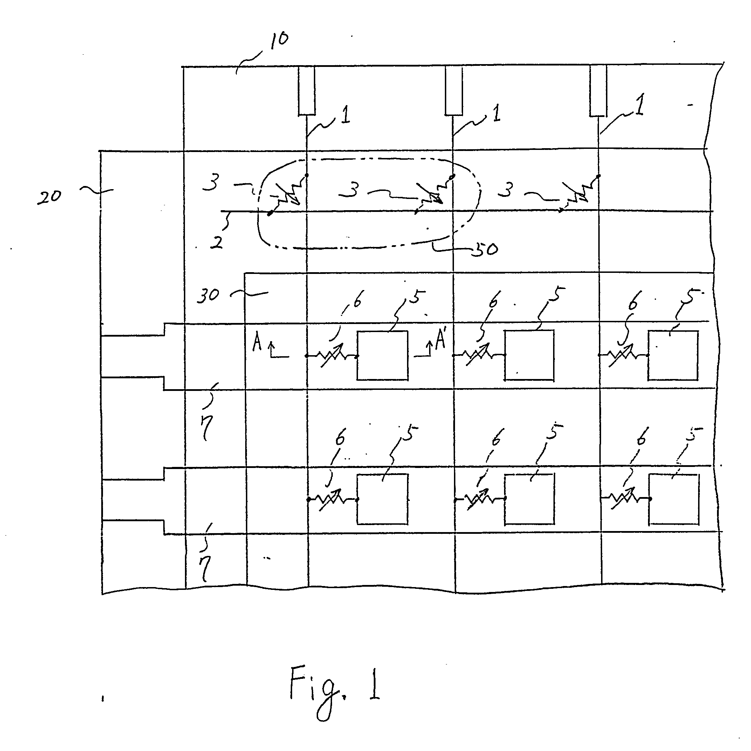

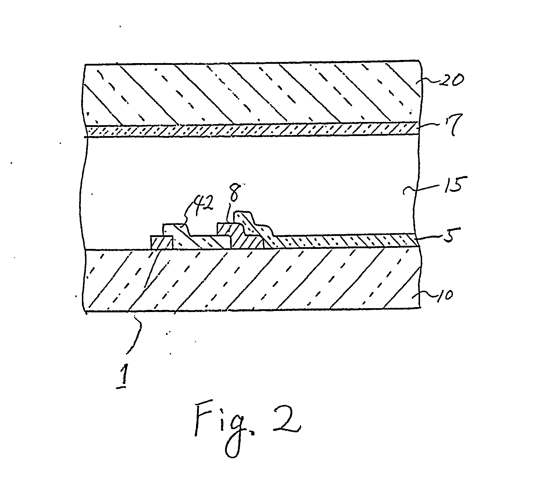

Referring to Fig. 1 and Fig. 2, a plurality of pixel electrodes 5 are formed on a display portion 30 of a lower glass substrate 10 in a matrix form. A plurality of columns of data lines 1 are also formed on the lower glass substrate 10. These data lines 1 are connected respectively to the pixel electrodes of each column via metal-insulator-metal (MIM) diodes 6.

A plurality of rows of address lines 7 are formed on an upper glass substrate 20. These address lines 7 are provided respectively over each rows of pixel electrodes 5.

A silicon nitride film 42 are formed between the data lines 1 and upper electrodes 8 which are connected to the pixel electrodes 5 to form the MIM diodes 6. A liquid crystal layer 15 is inserted between the pixel electrodes 5 and the address lines 7.

A wiring 2 to be supplied with a reference voltage such as ground potential or other fixed voltage, is formed on a periphery portion, which is outside the display portion 30, of the lower glass substrate 10. Every data line 1 is connected to the wiring 2 via MIM diodes 3. In the foregoing, the wiring 2 is to be supplied with reference voltage.

However, even if no reference voltage is supplied to the wiring 2, data lines 1 are protected from a dielectric breakdown, because data lines 1 are connected to each other through MIM diodes 3.

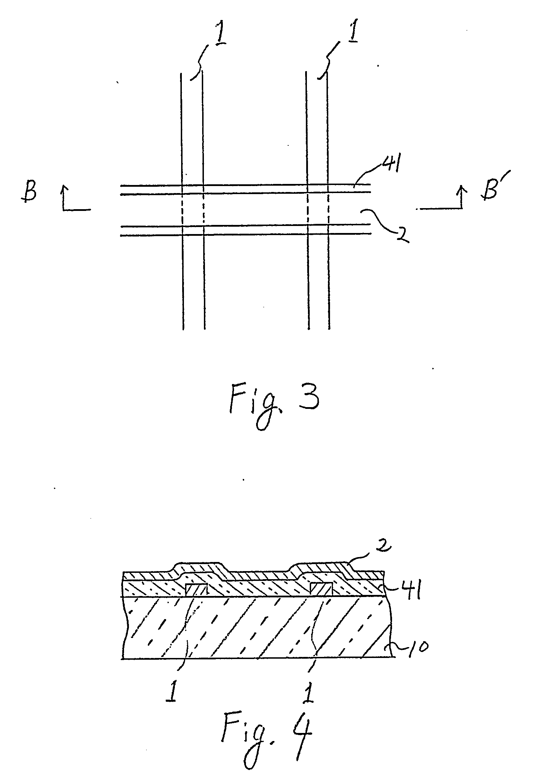

Referring to Fig. 3 and Fig. 4, Cr films of 100 nm thickness are formed on the lower glass substrate 10 to form the data lines 1. A silicon nitride film 41 are formed on the data lines 1 and on the lower glass substrate 10 to cross with the data lines 1. A Cr film of 50 nm thickness are formed on a silicon nitride film 41 to form the wiring 2. MIM diodes 3 are constituted with the data lines 1, the silicon nitride film 41 and the wiring 2. The silicon nitride film 41 is made of a non-stoichiometric silicon nitride having an excessive silicon. Silicon nitride of the same composition as the silicon nitride film 41 is also used for the silicon nitride film 42 to form the MIM diodes 6. Since the same silicon nitride material is used to form both MIM diodes 6 and MIM diodes 3, the electrostatic protection element (MIM diodes 3) of the present invention can be produced without requiring any additional process.

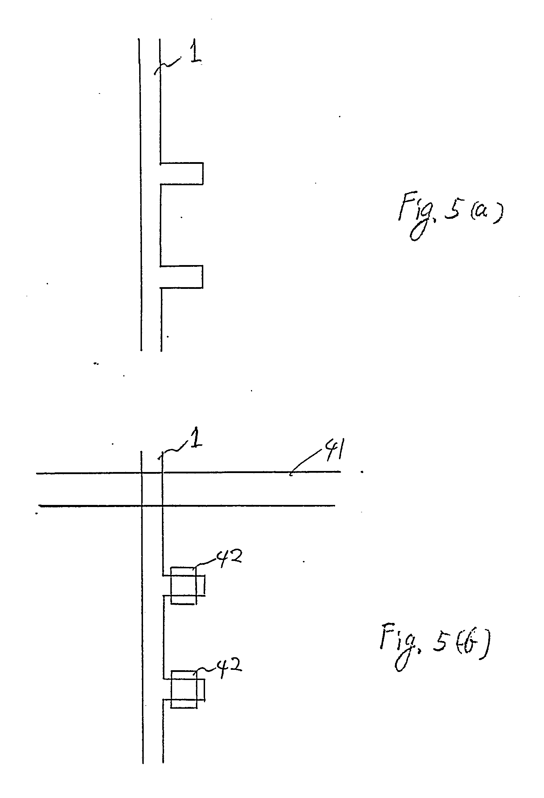

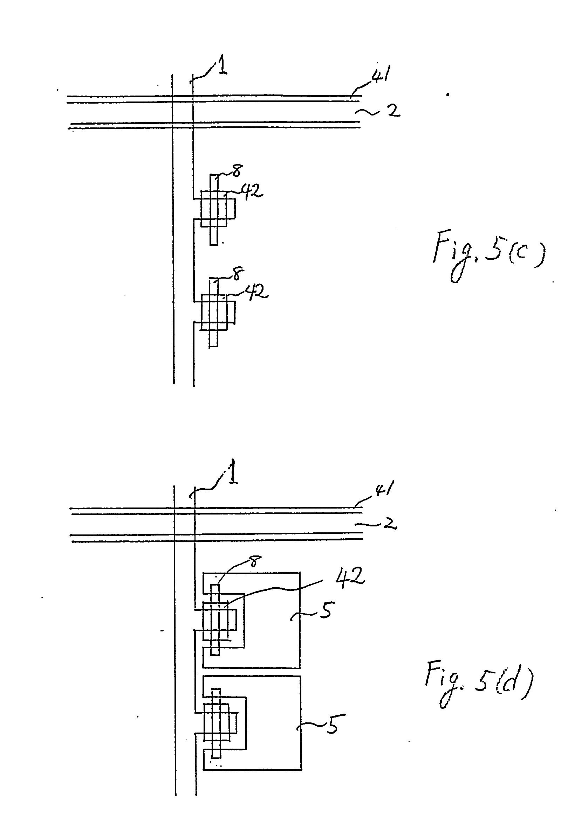

Referring to Fig. 5(a), a Cr film of 100 nm is formed on a glass substrate by sputtering, and a data line 1 is formed by patterning. Then, referring to Fig. 5(b), a silicon nitride of 1,500 Å having an excessive silicon is formed by a plasma CVD method. The required conditions vary according to the device to be used, but typically, a plasma CVD process with $SiH_4$ and $N_2$ gases having such values as $SiH_4$ = 50 sccm, $N_2$ = 200 sccm and the like is used at a substrate temperature of approximately $350°C$. Subsequently, the silicon nitride film is patterned to form a stripe pattern of silicon nitride film 41 outside the display area and rectangular patterns of silicon nitride films 42 inside the display area. Next, referring to Fig. 5(c) and Fig. 5-(d), upper electrodes 8 and wiring 2 of Cr of 1,000 Å thickness and pixel electrodes of indium-tin-oxide (ITO) of 500 Å thickness are formed by sputtering and patterning. Then, annealing at a temperature of approximately $300°C$ is performed for one hour at an $N_2$ atmosphere.

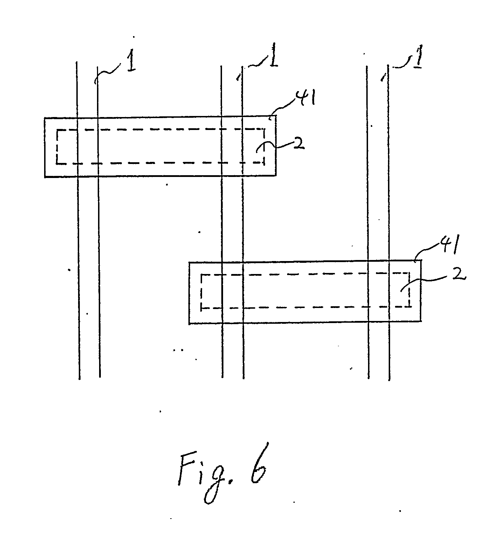

Referring to Fig. 6, wirings 2 connects adjacent data lines 1 with a diode. Consequently, according to this embodiment, any short circuit does not take place between the data lines unless two of the diodes are simultaneously conducted, providing an advantage that the occurrence of a short circuit failure of the data lines caused by a defective protection element is diminished.

In the foregoing, the MIM diodes 3 as protective diodes are connected to the data lines to protect these data lines, but it is possible to be connected to the address lines to protect these address lines.

## Claims

1. An active matrix liquid crystal display panel comprising:
a lower substrate;
a plurality of pixel electrodes formed on a display portion of said lower substrate in a matrix form;
a plurality of columns of first lines formed on said lower substrate, said first lines being connected respectively to said pixel electrodes of each column by first diodes;
an upper substrate;
a plurality of rows of second lines formed on said upper substrate, said second lines being provided respectively over each row of said pixel electrodes;
a liquid crystal layer inserted between said pixel electrodes and said second lines;
a wiring formed on a periphery portion of said lower substrate; said periphery portion being outside said display portion; and
a second diode connected between said wiring and said first line.

2. An active matrix liquid crystal display panel as claimed in claim 1, wherein said first lines are data lines and said second lines are address lines.

3. An active matrix liquid crystal display panel as claimed in claim 2, wherein said first diodes and said second diode are metal-insulator-metal diodes.

4. An active matrix liquid crystal display panel as claimed in claim 3, wherein said insulator of said metal-insulator-metal diodes is silicon nitride.

5. An active matrix liquid crystal display panel as claimed in claim 4, wherein said silicon nitride for said first diode is the same composition as said second diode.

6. An active matrix liquid crystal display panel comprising:
a lower substrate;
a matrix of pixel electrodes formed on said lower substrate;
data lines formed on said lower substrate, said data lines being connected to said pixel electrodes of each column by first metal-insulator-metal diodes, respectively;
an upper substrate;
address lines formed on said upper substrate, said address lines being provided over each row of said pixel electrodes;
a liquid crystal layer inserted between said pixel electrodes and said address lines;
a wiring formed on said lower substrate; and
second metal-insulator-metal diodes formed on said lower substrate, each one of said second metal-insulator-metal diodes being connected between said wiring and each one of said data lines, respectively.

7. An active matrix liquid crystal display panel as claimed in claim 6, wherein said insulator of said first and second metal-insulator-metal diodes are the same silicon nitride composition.

8. An active matrix liquid crystal display panel comprising:

a lower substrate;

a matrix of pixel electrodes formed on said lower substrate;

data lines formed on said lower substrate, said data lines being connected to said pixel electrodes of each column by first metal-insulator-metal diodes, respectively;

an upper substrate;

address lines formed on said upper substrate, said address lines being provided over each row of said pixel electrodes;

a liquid crystal layer inserted between said pixel electrodes and said address lines; and

second metal-insulator-metal diodes formed on said lower substrate, said data lines being connected to each other through said second metal-insulator-metal diodes.

9. An active matrix liquid crystal display panel as claimed in claim 8, wherein said insulator of said first and second metal-insulator-metal diodes are the same silicon nitride composition.

Fig. 1

Fig. 2

Fig. 3

Fig. 4

Fig. 5 (a)

Fig. 5 (b)

Fig. 5 (c)

Fig. 5 (d)

Fig. 6